# EUROPEAN PATENT APPLICATION

(11) **EP 3 422 310 A1**
(43) Date of publication of application: **02.01.2019**
(21) Application number: 18178286.3
(22) Date of filing: 18.06.2018
(51) Int. Cl.: G07G 1/00, G07G 1/12

(54) **COMBINED SCANNER AND POINT-OF-SALE (POS) TERMINAL**

(30) Priority: 28.06.2017 US 201715636095
(71) Applicant: NCR Corporation, Atlanta, GA 30308-1007 (US)
(72) Inventor: SINGH, Narinder, Atlanta, GA 30308-1007 (US); EGAN, Gregory Scott, Atlanta, GA 30308-1007 (US); JAMES, Daniel, Atlanta, GA 30308-1007 (US)
(74) Representative: Secerna LLP

(57) **Abstract**

A scanner and Point-Of-Sale device (100) is provided. The device includes a motherboard, and the motherboard includes a scanner supported by a System on Chip (SoC) of the motherboard. The motherboard also configured for processing transaction data during transactions at the device.

## Description

Existing Point-Of-Sale (POS) systems comprise several independent devices that are interfaced to a main Personal Computer (PC) as a POS terminal. The component peripheral devices are expensive and difficult to keep in synchronization. For example, when the Operating System (OS) is updated for the PC, then corresponding drivers and firmware on the peripheral devices often have to be updated for the modified OS of the POS terminal. Different vendors supply the various peripheral devices of the POS terminal and some vendors do not want to continue to update their peripheral devices for new patches and releases that support the latest OS.

Additionally, as functionality of PCs are enhanced some existing peripherals of POS terminals have reached a hard limit in terms being capable of supporting additional functionality through software updates alone. That is, some existing peripherals of POS terminals lack the necessary hardware to provide enhanced functionality to the POS terminals.

This scenario is particularly noticeable with bioptic scanners that include multiple cameras and are used for a variety of purposes by a retailer at their POS terminals, such as barcode reading, image processing, video surveillance, and other purposes. Typically, a bioptic scanner is integrated into a counter at the POS terminal and interfaced through a cabled connection, such as Universal Serial Bus (USB), to a port on the POS terminal (PC). Existing hardware resources for the bioptic scanner are limited making it difficult to provide increased functionality to the POS terminal as the POS terminals are being upgraded in the industry with increased hardware and software capabilities.

In various embodiments, a combined scanner and POS terminal is presented.

The combined scanner and POS terminal includes: a motherboard. The motherboard configured to internally control a bioptic scanner with multiple cameras and Point-Of-Sale (POS) transaction processing associated with a POS terminal.

In accordance with a first aspect of the present invention there is provided a device, comprising: a motherboard; the motherboard configured to internally control a scanner with multiple cameras and Point-Of-Sale (POS) transaction processing associated with a POS terminal.

Optionally, the motherboard may include a first processor having N cores.

Optionally, the motherboard may include a graphic processor having N cores.

Optionally, the motherboard may include a single core image processor.

Optionally, the scanner may be supported by a System on Chip (SoC) of the motherboard.

Optionally, the motherboard may include a plurality of external ports for interfacing peripherals to the device.

Optionally, the external ports include: an image recovery port, status Light Emitting Diode (LED) port, a power in port, an Ethernet port, 24V Universal Serial Bus (USB) port, a plurality of 12V USB ports, a plurality of High Definition Multimedia Interface (HDMI) ports, and a cash drawer port.

Optionally, the motherboard may be configured to control a scale through a Printed Circuit Board Assembly (PCBA) interfaced to the motherboard.

Optionally, the motherboard may be configured to control a scale display for the scale.

Optionally, the multiple cameras include one to four cameras.

Optionally, the motherboard may be configured to control a motion sensor through a Printed Circuit Board Assembly (PCBA).

Optionally, the motherboard may include at least one expansion slot for interfacing an expansion Printed Circuit Board Assembly (PCBA).

In accordance with a second aspect of the present invention there is provided a method comprising: initiating, by a combined Scanner and Point-Of-Sale (POS) device, a transaction; receiving, by the combined Scanner and POS device, image data from a barcode of an item being scanned; decoding, by the combined Scanner and POS device, the barcode into item detail; processing, by the combined Scanner and POS device, the transaction with the item detail.

Optionally, receiving further may include obtaining the image data from one or more cameras interfaced to a System on Chip (SoC) of the combined Scanner and POS device by obtaining item image data from an image processing unit and bar code image data from a graphic processing unit.

Optionally, the method may further comprise detecting motion from a motion sensor that may be integrated into the combined Scanner and POS device on a Printed Circuit Board Assembly (PCBA).

Optionally, the method may further comprise activating one or more of the one or more cameras by the SoC in response to the detected motion and recording video captured by the one or more cameras.

Optionally, the method may further comprise obtaining weight data for a weight of a second item from a scale that may be integrated into the combined Scanner and POS device on a Printed Circuit Board Assembly (PCBA).

Optionally, obtaining may further include looking up price data in response to the weight data and providing the price data for processing the transaction.

In accordance with a third aspect of the present invention there is provided a method comprising: booting a Scanner and Point-Of-Sale (POS) device having scanner functionality embedded in a System on Chip (SoC) of the Scanner and POS device; identifying and configuring, by the Scanner and POS device, peripheral devices connected to the Scanner and POS device; controlling by the SoC multiple cameras integrated into the Scanner and POS device for scanning items and processing the scanner functionality during a transaction at the Scanner and POS device; and interacting, by the Scanner and POS device, with the peripherals during the transaction for completing the transaction.

Optionally, the method may further comprise obtaining weight data from a Printed Circuit Board Assembly (PCBA) of a scale that may be integrated into the Scanner and POS device for at least one other item associated with the transaction.

Optionally, the method may further comprise activating by the SoC one or more of the cameras in response to detected motion detected by a Printed Circuit Board Assembly (PCBA) of a motion sensor that may be integrated into the Scanner and POS device for recording video from the one or more cameras.

These and other aspects of the present invention will be apparent from the following specific description, given by way of example, with reference to the accompanying drawings.
FIG. 1A is a diagram of an architectural layout for a combined scanner and POS terminal, according to an example embodiment.
FIG. 1B is a diagram of peripheral port connections for a combined scanner and POS terminal, according to an example embodiment.
FIG. 1C is a block diagram for system controllers of a combined scanner and POS terminal, according to an example embodiment.
FIG. 1D is a diagram of a multiple peripheral devices interfaced to a combined scanner and POS terminal, according to an example embodiment.
FIG. 2 is a diagram of a method for operating a combined scanner and POS terminal, according to an example embodiment.
FIG. 3 is a diagram of another method for operating a combined scanner and POS terminal, according to an example embodiment.
FIG. 4 is a diagram of another combined scanner and POS terminal, according to an example embodiment.

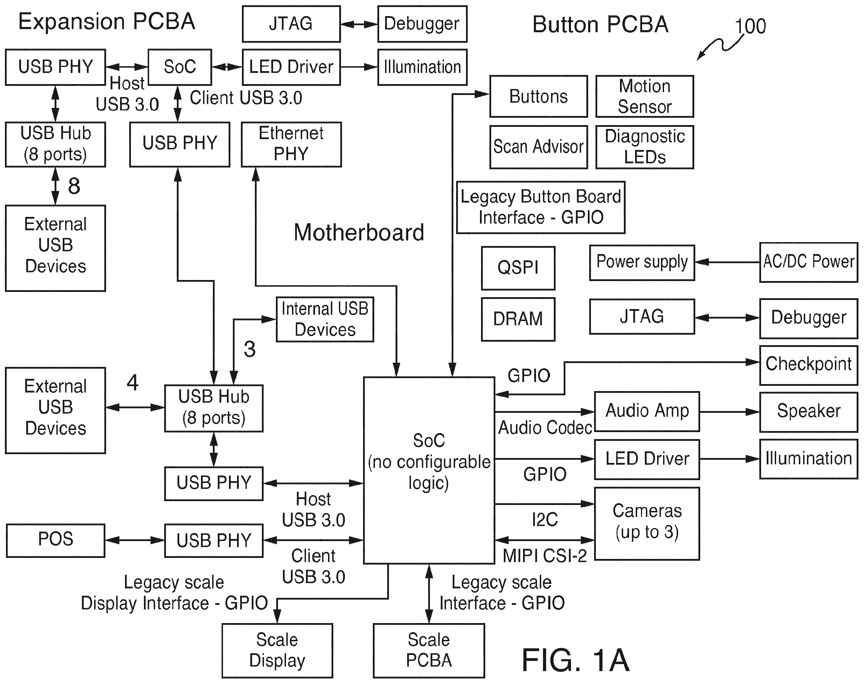

FIG. 1A is a diagram of an architectural layout for a combined scanner and POS terminal, according to an example embodiment. The various components are illustrated and the arrangement of the components is presented for purposes of illustration only. It is to be noted that other arrangements with more or less components are possible without departing from the combined scanner and POS terminal presented herein and below.

The combined scanner and POS terminal (device) 100 includes a single motherboard with a variety of processor cores. The motherboard includes a variety of communication ports for interfacing peripheral devices through USB connections, Ethernet connections (through internal USB ports and external-facing USB ports organized as a USB hub, General Purpose Input/Output (GPIO) connections, display connections, a cash drawer connection, and others.

The combined scanner and POS terminal 100 includes one or more Printed Circuit Board Assemblies (PCBA) that support a variety of internally interfaced devices, such as a motion sensor, real-time video surveillance (scan advisor through integrated cameras), diagnostic Light Emitting Diodes (LEDs), interface buttons, and the like.

An expansion PCBA permits making internal connections to the motherboard for other (expandable peripherals).

GPIO connections permit connections to a variety of other devices as well, such as scale display, a scale PCBA, and the like.

The motherboard includes internal support for a bioptic scanner including connections to up to 3 cameras.

In an embodiment, the combined scanner and POS terminal 100 includes an Open Architecture (OA) operating system, such as LINUX.

The motherboard includes a scanner that is supported by a System on Chip (SoC).

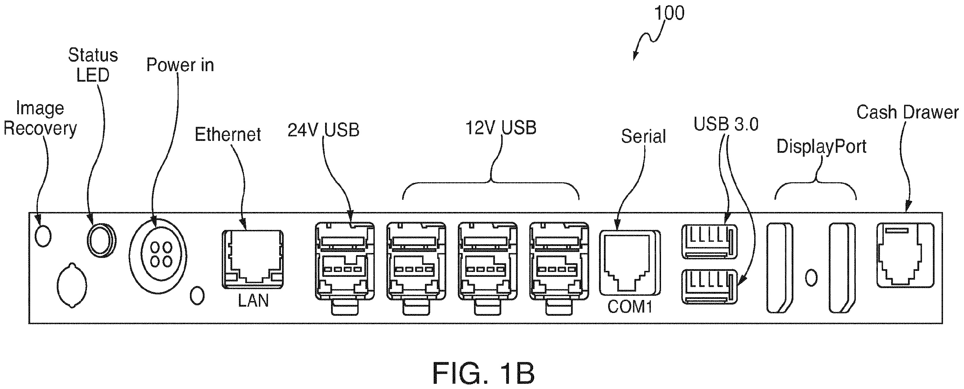

The motherboard includes a variety of externally-facing interface ports for connection a variety of peripherals and providing network connectivity, as shown in the FIG. 1B.

The external port connections include connections for image recovery port, a status LED, power port, Ethernet, 24V USB port, a plurality of 12V USB ports, a COM1 Serial port, 2 USB 3.0 ports, 2 DisplayPort-enabled High-Definition Multimedia Interface ports, and a cash drawer port.

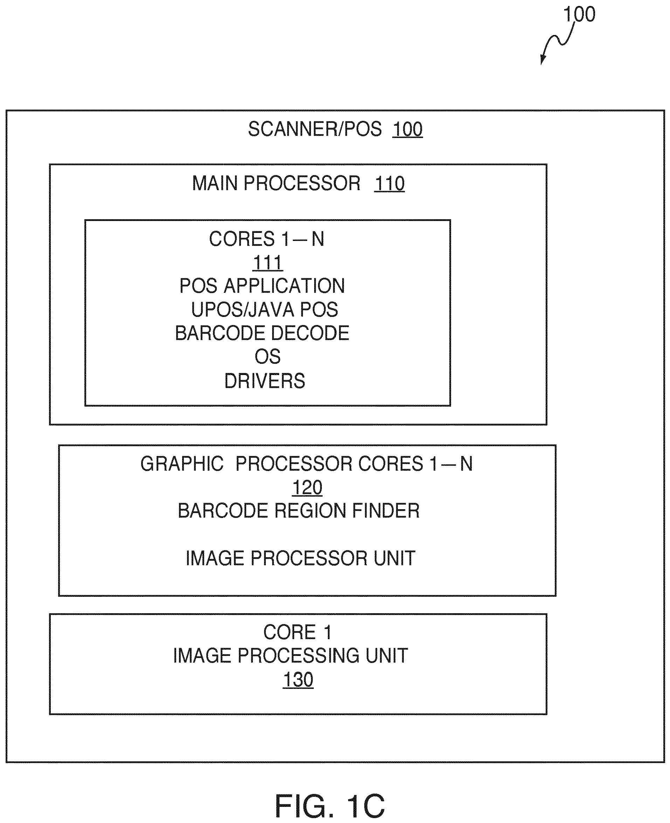

The FIG. 1C illustrates a block diagram of the system controllers of the motherboard presented in the FIG. 1A. The combined scanner and POS terminal 100 includes a main processor with 1-N cores (in an embodiment N is 4 cores) responsible for the main POS application for the combined scanner and POS terminal 100, Unified POS (UPOS) and Java POS applications, barcode decoding applications, the OS, and drivers for the peripherals.

The motherboard also includes a graphic processor having 1-N cores (in an embodiment N is 3 cores) that support the image processing unit (bioptic scanner) and barcode region finder functionality.

The motherboard also includes an image processing unit (image processor) having a single core that connects to 1 to 4 cameras.

The motherboard of the combined scanner and POS terminal 100 is based on an Open Architecture hardware that permits expansion for expanding the functionality of the internal bioptic scanner for scanning, scan watch (video surveillance) as well as expansion for POS terminal functionalities.

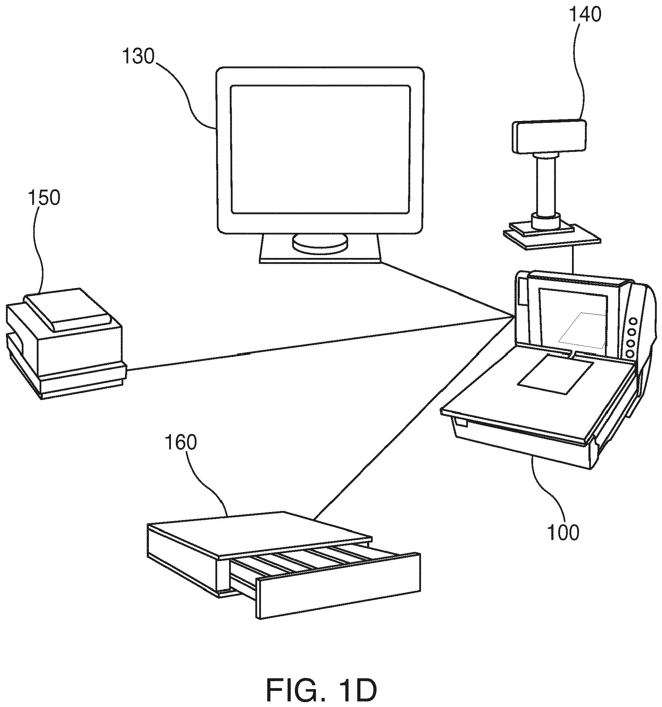

The FIG. 1D is a diagram of a multiple peripheral devices interfaced to a combined scanner and POS terminal 100, according to an example embodiment. The combined scanner and POS terminal 100 has a variety of POS peripherals connected to the externally facing motherboard interfaces ports including: a main display 130, a customer display 140, a receipt printer 150, and a cash drawer 160. As illustrated support for the bioptic scanner and scale are built into the combined scanner and POS terminal 100. The motherboard resides under the scale plate and horizontal scanning plate, the rear or sides of the vertical scanner includes the external interface ports to which the peripherals 130-160 are attached through cabling utilizing USB, HDMI, COM, Ethernet, *etc.*

The combined scanner and POS terminal 100 is software agnostic and can run any OS, such as Windows®, Linux®, Android®, and others.

The combined scanner and POS terminal 100 is flexible can process on a variety of hardware platforms, such as X86, ARM, *etc.*

The combined scanner and POS terminal 100 can be configured to support any camera interface Mobile Industry Processor Interface (MIPI), USB, *etc.*

The combined scanner and POS terminal 100 can use any embedded image processing unit.

The architecture of the combined scanner and POS terminal 100 leverages a variety of different scan-based products and processing, such as bioptic and single scanning, Scan portal ®, Scan Watch®, Smart Shelf®, ScannerPOS®, consumer and item tracking, PLU (Price Look Up) by item and not barcode), *etc.*

In an embodiment, the combined scanner and POS terminal 100 includes digital board (SOC/Multi-Chip Carrier device): host coms/IO board that is 12V plus USB 2.0 with latching; power input that is a 12V Buck Converter, scale coms that is USB 2.0 internal to the motherboard; speaker that is audio codec plus AMP; a button board/Scan Advisor® that is SPI/12C; an internal hard drive that includes M.2 connector; DDR4 memory with mem connector; base memory that is chip down, and an I/O board with ribbon cable. The I/O port interfaces includes: a recovery switch that is push button; hand held scanner with USB 2.0 type A; expansion port that is USB 2.0 type A; sensormatic® with AUX modular jack; checkpoint® with 2 pin Molex® jack, customer display with display port; attendant display with display port; network connectivity with modular jack with mags; and an audio jack that is a headphone jack. The I/O board is based on either a high-end United States (U.S.) standard or European (EU) standard and includes: a scanner with 12V USB and power; a printer with 24V USB and power, 2X20 display with USB type A; keyboard with USB type A, cash drawer kick out with modular jack, payment terminal with RS232 modular jack, and a power switch for on and off. The I/O board's power output is 24V with 4 pin POS brick.

In an embodiment, the POS digital board is a Cannon Lake® i3/i5. I/O board is internal and external with micro controller on board.

The combined scanner and POS terminal 100 includes an integrated motherboard with an integrated Bioptic Scanner having 3 or 4 cameras and customized support for POS terminal processing and POS terminal peripherals. Peripherals can include: displays, printers, cash drawers, additional scanners, additional cameras, keyboards, other input peripherals, and the like.

The combined scanner and POS terminal 100 is space efficient and can reduce retailers expenditures on a separate PC-based POS terminal combined with an external Bioptic scanner, since the combined scanner and POS terminal 100 provides an integrated motherboard for both the POS terminal and a Bioptic Scanner. According to initial estimates retailers can expect to save on average $300 per POS terminal with purchase of the combined scanner and POS terminal 100 as opposed to the current practice of purchasing the POS terminal and the Bioptic Scanner separately and connecting the Bioptic scanner to the POS terminal. Additionally, because the combined scanner and POS terminal 100 is hardware designed for POS systems, the combined scanner and POS terminal 100 provides superior processing response times over the convention approach and provides easier expansion and enhanced functionality from that of a two device approach (POS terminal and separate Bioptic Scanner).

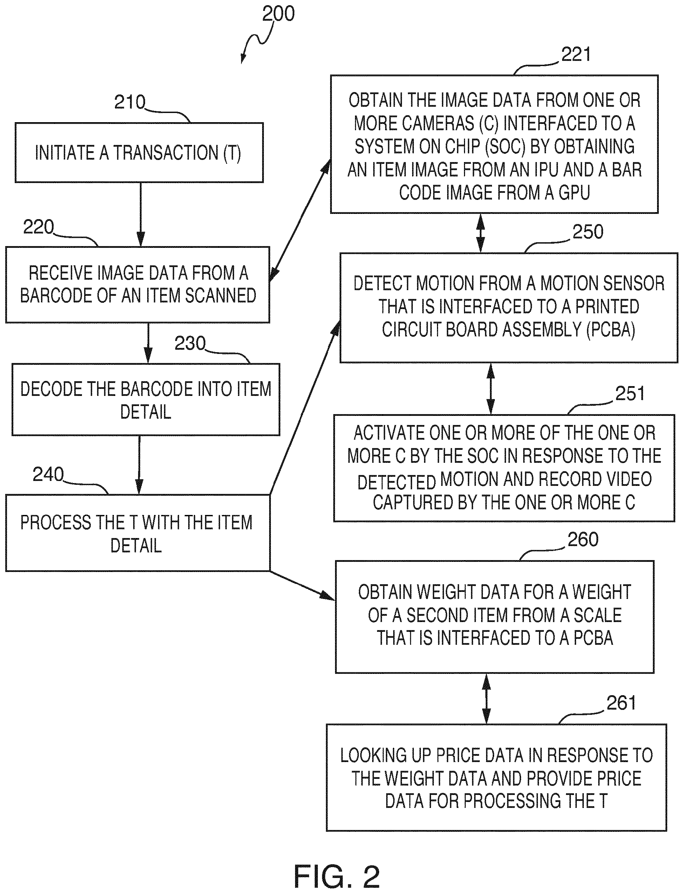

These and other embodiments are now discussed with the FIGS. 2-4.

FIG. 2 is a diagram of a method 200 for operating a combined scanner and POS terminal, according to an example embodiment. The hardware/software module(s) that implements the method 200 is referred to as an "on-chip scanner POS transaction manager." In an embodiment, the on-chip scanner POS transaction manager is implemented as specialized hardware circuitry to perform the processing discussed below for the combined scanner and POS device/terminal. In an embodiment, the on-chip scanner POS transaction manager is implemented as executable instructions programmed and residing within memory and/or a non-transitory computer-readable (processor-readable) storage medium and executed by one or more processors of a combined scanner and POS device/terminal.

In an embodiment, the on-chip scanner POS transaction manager is software and firmware that is loaded and processed on the combined scanner and POS terminal (device 100).

At 210, on-chip scanner POS transaction manager initiates a transaction on a scanner and POS terminal, such as device 100.

At 220, the on-chip scanner POS transaction manager receives image data from a barcode of an item scanned.

According to an embodiment, at 221, the on-chip scanner POS transaction manager obtains the image data from one or more cameras interfaced to a SoC of the scanner and POS terminal by obtaining item image data from an Image Processing Unit (IPU) and bar code image data from a GPU.

At 230, the on-chip scanner POS transaction manager decodes the barcode into item detail.

At 240, the on-chip scanner POS transaction manager processed the transaction with the item detail.

In an embodiment of 221 and at 250, the on-chip scanner POS transaction manager detects motion from a motion sensor that is interfaced to a PCBA of the scanner and POS terminal/device.

According to an embodiment of 250 and at 251, the SoC activates one or more of the one or more cameras in response to detected motion and records video captured by the one or more cameras.

In an embodiment, at 260, the on-chip scanner POS transaction manager obtains weight data for a weight of a second item from a scale that is interfaced to a PCBA of the scanner and POS terminal/device.

In an embodiment of 260 and at 261, the on-chip scanner POS transaction manager looks up price data in response to the weight data and provides the price data for processing the transaction.

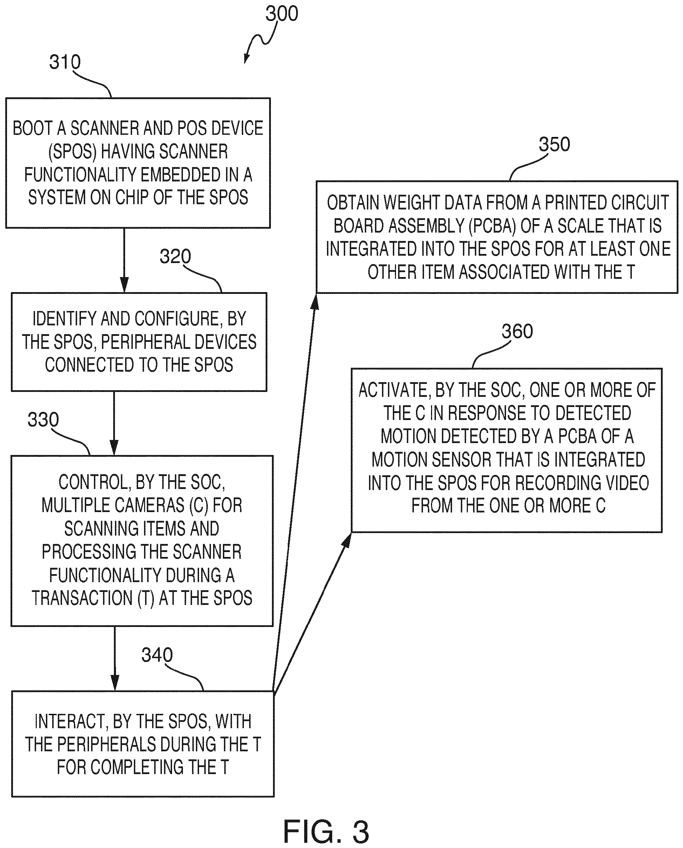

FIG. 3 is a diagram of another method 300 for operating a combined scanner and POS terminal, according to an example embodiment. The hardware/software module(s) that implements the method 200 is referred to as an "integrated scanner POS transaction manager." In an embodiment, the integrated scanner POS transaction manager is implemented as specialized hardware circuitry to perform the processing discussed below for the combined scanner and POS device/terminal. In an embodiment, the integrated scanner POS transaction manager is implemented as executable instructions programmed and residing within memory and/or a non-transitory computer-readable (processor-readable) storage medium and executed by one or more processors of a combined scanner and POS device/terminal.

The integrated scanner POS transaction manager presents another and in some ways enhanced processing perspective of the on-chip scanner POS transaction manager (discussed above with reference to the FIG. 2).

In an embodiment, the integrated scanner POS transaction manager is software and firmware that is loaded and processed on the combined scanner and POS terminal (device 100).

In an embodiment, the integrated scanner POS transaction manager performs all or some combination of the processing discussed above with the FIG. 1A-1D and 2.

At 310, the combined scanner and POS device is booted with the firmware and hardware discussed above with the FIGS. 1A-1D and 2. This initiates the integrated scanner POS transaction manager on a device (scanner and POS device 100) having embedded scanner functionality in a SoC of the scanner and POS device 100.

At 320, the integrated scanner POS transaction manager identifies and configures peripheral devices connected to the scanner and POS device 100. In an embodiment, the peripheral devices include at least what is shown in the FIG. 1D (discussed above).

At 330, the SoC controls multiple cameras for scanning items and processing the scanner functionality during a transaction.

At 340, the integrated scanner POS transaction manager interacts with the peripherals during the transaction for completing the transaction.

In an embodiment, at 350, the integrated scanner POS transaction manager obtains weight data from a PCBA of a scale that is integrated into the scanner and POS device/terminal for at least one other item associated with the transaction.

In an embodiment, at 360, the SoC activates one or more of the cameras in response to detected motion detected by a PCBA of a motion sensor that is integrated into the scanner and POS device 100 for recording video from the one or more cameras.

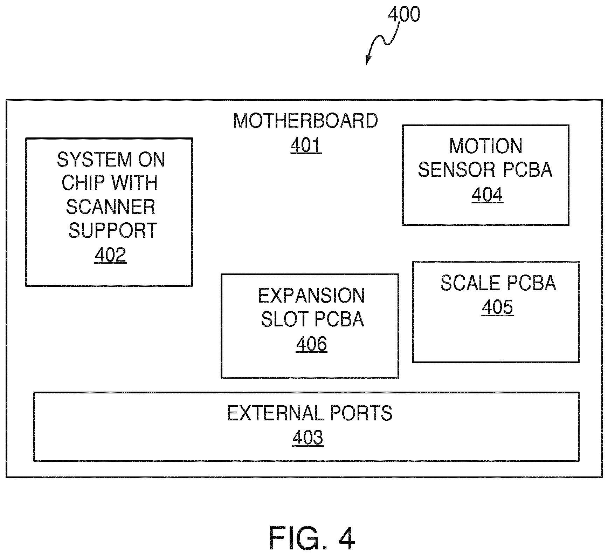

FIG. 4 is a diagram of another combined scanner and POS terminal 400 (device 400), according to an example embodiment. The device 400 is programmed through specialized hardware circuitry, firmware, and POS applications loaded as executable instructions into memory of the device 400 and executed by one or more processors of the device 400.

In an embodiment, the device 400 is the combined scanner and POS terminal 100.

In an embodiment, the device 400 performs the processing discussed above with the FIGS 1A-1D and 2-3.

The device 400 includes a motherboard 401. The motherboard configured and wired for providing on-chip scanning functionality and POS transaction processing.

In an embodiment, the motherboard 401 includes a SoC 402 for scanner functionality having embedded scanner support from a plurality of cameras integrated into the device 400.

In an embodiment, the motherboard 401 includes a plurality of external ports 403. In an embodiment, the external ports 403 are as provided in the FIG. 1B above.

In an embodiment, the motherboard 401 incudes a PCBA 404 for controlling an integrated motion sensor of the device 400. In an embodiment, motion detect triggers the SOC 402 to activate the cameras and record video captured by the cameras.

In an embodiment, the motherboard 401 includes a weight scale PCBA 405 for controlling an integrated weight scale of the device 400. In an embodiment, the motherboard 401 includes connectivity for controlling a display of the weight scale. In an embodiment, the cameras and image capturing processing associated with the scanner functionality is integrated with the weight scale functionality in the configuration that was illustrated in the FIG. 1D (combined Bioptic scanner and weigh scale).

In an embodiment, the motherboard 401 includes at least one expansion slot for at least one additional PCBA.

The device 400 includes a single motherboard 402 with multiple PCBAs 404 and 405 that provides on-chip scanner and weight scale support (via the SoC 402) along with traditional POS transaction processing and traditional POS peripheral support through the external ports 403. The device 400 is a single device with a customized architecture as discussed in the FIGS. 1A-1C.

One now appreciates how a lower cost and expandable POS terminal can be provided through scanner hardware and software functionality being integrated into a POS terminal as a single device (100 and 400).

It should be appreciated that where software is described in a particular form (such as a component or module) this is merely to aid understanding and is not intended to limit how software that implements those functions may be architected or structured. For example, modules may be illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors of a single device, or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A device (100), comprising:
a motherboard;
the motherboard configured to internally control a scanner with multiple cameras and Point-Of-Sale (POS) transaction processing associated with a POS terminal.

2. The device of claim 1, wherein the motherboard includes a first processor having N cores.

3. The device of claim 2, wherein the motherboard includes a graphic processor having N cores.

4. The device of claim 3, wherein the motherboard includes a single core image processor.

5. The device of any preceding claim, wherein the scanner is supported by a System on Chip (SoC) of the motherboard.

6. The device of any preceding claim, wherein the motherboard includes a plurality of external ports for interfacing peripherals to the device.

7. The device of claim 6, wherein the external ports include: an image recovery port, status Light Emitting Diode (LED) port, a power in port, an Ethernet port, 24V Universal Serial Bus (USB) port, a plurality of 12V USB ports, a plurality of High Definition Multimedia Interface (HDMI) ports, and a cash drawer port.

8. The device of any preceding claim, wherein the motherboard is configured to control a scale through a Printed Circuit Board Assembly (PCBA) interfaced to the motherboard.

9. The device of claim 8, wherein the motherboard is configured to control a scale display for the scale.

10. The device of any preceding claim, wherein the multiple cameras include one to four cameras.

11. The device of any preceding claim, wherein motherboard is configured to control a motion sensor through a Printed Circuit Board Assembly (PCBA).

12. The device of any preceding claim, wherein the motherboard includes at least one expansion slot for interfacing an expansion Printed Circuit Board Assembly (PCBA).

13. A method (300), comprising:
booting a Scanner and Point-Of-Sale (POS) device having scanner functionality embedded in a System on Chip (SoC) of the Scanner and POS device (310);
identifying and configuring, by the Scanner and POS device, peripheral devices connected to the Scanner and POS device (320);
controlling by the SoC multiple cameras integrated into the Scanner and POS device for scanning items and processing the scanner functionality during a transaction at the Scanner and POS device (330); and
interacting, by the Scanner and POS device, with the peripherals during the transaction for completing the transaction (340).

14. The method of claim 13 further comprising, obtaining weight data from a Printed Circuit Board Assembly (PCBA) of a scale that is integrated into the Scanner and POS device for at least one other item associated with the transaction (350).

15. The method of claim 13 further comprising, activating by the SoC one or more of the cameras in response to detected motion detected by a Printed Circuit Board Assembly (PCBA) of a motion sensor that is integrated into the Scanner and POS device for recording video from the one or more cameras (360).
